# EUROPÄISCHE PATENTSCHRIFT

(11) **EP 0 881 106 B1**
(45) Veröffentlichungstag und Bekanntmachung des Hinweises auf die Patenterteilung: **18.12.2002**
(21) Anmeldenummer: 98106956.0
(22) Anmeldetag: 16.04.1998
(51) Int. Cl.: B60G 11/08, B60G 11/10

(54) **Vorderachse für ein Kraftfahrzeug**
Front axle for a motor vehicle
Essieu avant pour un véhicule à moteur

(30) Priorität: 26.05.1997 DE 19721878
(43) Veröffentlichungstag der Anmeldung: 02.12.1998
(73) Patentinhaber: Dr.Ing.h.c. F. Porsche Aktiengesellschaft, 70435 Stuttgart (DE)
(72) Erfinder: Hoffmann, Martin, 71665 Vaihingen (DE); Schaible, Walter, 71282 Hemmingen (DE)

(56) Entgegenhaltungen:
- EP-A- 0 243 102
- DE-A- 1 924 175
- DE-A- 4 140 236
- FR-A- 2 611 604
- GB-A- 972 121
- GB-A- 1 205 850
- US-A- 4 458 918
- US-A- 4 619 466

## Beschreibung

Die Erfindung bezieht sich auf eine Vorderachse für ein Kraftfahrzeug nach dem Oberbegriff des Anspruchs 1.

Aus der US 3,181,641 ist eine quer angeordnete Blattfeder für ein Kraftfahrzeug als Radführungselement bekannt. Diese Blattfeder ist rechteckförmig ausgebildet und zu beiden Seiten einer Längsmittenachse des Fahrzeugs in einem Halteelement elastisch und schwenkbar gelagert, wobei das Halteelement mit einem Längsträger verbunden ist. Die freien Enden der Blattfeder sind mit einem Schwenklager verbunden. Zur Radführung ist des weiteren ein Radführungslenker vorgesehen, der ebenfalls mit dem Schwenklager verbunden wird.

Die FR 2 611 604 zeigt eine Radaufhängung für Fahrzeuge, die aus einer quer angeordneten Blattfeder besteht, die in einem Querträger an zwei Stellen elastisch und schwenkbar gelagert ist. Am Querträger angelenkte Dreieckslenker stützen sich an den freien Enden der Blattfeder ab.

Die GB 972,121 zeigt eine Radaufhängung für Kraftfahrzeuge, bei der die Radführung durch jeweils zwei an einem Querträger angelenkte Dreieckslenker übernommen wird. Eine im Querträger an zwei Stellen elastisch gelagerte Blattfeder ist an ihren freien Enden mit den unteren Dreieckslenkern elastisch verbunden.

Aufgabe der Erfindung ist es, eine verbesserte Vorderachse für ein Kraftfahrzeug mit einer Querblattfeder zu schaffen, die eine exakte Radführung ermöglicht und aus Bauteilen besteht, die in einfacher Weise montierbar sind.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass die Verbindung eines Dreieckslenkers mit einem freien Ende einer Querblattfeder und mit einer Abstützung in einem Querträger des Fahrzeugaufbaus eine Vorderradaufhängung ergibt, die eine Radführung mit einer durch die Blattfeder bewirkten definierten Feder- und Stabiwirkung gewährleistet. Die Blattfeder weist zur Verminderung einer Wankneigung im Mittenbereich bis zu den elastischen Federlagern eine größere Breite auf als an ihren freien Enden.

Die Vorderachse ist in einfacher Bauweise zusammensetzbar und als Moduleinheit funktionsfertig ins Fahrzeug einsetzbar. Sie besteht im wesentlichen aus einem Querträger, in dem die Blattfeder über elastische Federlager befestigt ist. Mit dem

Querträger wird ein verschwenkbarer Dreieckslenker verbunden, an dem das freie Ende der Blattfeder befestigbar ist. Der Dreieckslenker ist wiederum mit einem Schwenklager verbunden, der ein Dämpfer- bzw. Federbein trägt. Eine Verbindung einer Bremseinrichtung am Schwenklager ist in einfacher Weise möglich. Ein Lenkgetriebe ist mit dem Querträger vorzumontieren. Diese gesamte Funktionseinheit ist fertig montiert und eingestellt ins Fahrzeug einsetzbar.

Zur elastischen Abstützung der Blattfeder im Querträger zu beiden Seiten einer Längsmittelachse des Fahrzeugs, dienen elastische Federlager, die über eine Federbrücke im Querträger festgeklemmt befestigt sind. Mittels miteinander korrespondierender Aus- und Einformungen im Federlager und an der Federbrücke bzw. am Querträger ist das Federlager unverrückbar eingeklemmt gehalten.

Eine elastische Verbindung der freien Enden der Blattfeder mit dem Querlenker erfolgt über in elastischen Lagerblöcken eingelassene und gehaltene Schrauben. Die elastischen Lagerböcke sind mit der Blattfeder, wie auch die elastischen Federlager, verklebt.

Nach einer weiteren Ausführung kann statt des elastischen Lagerbocks mit eingelassener Schraube auch ein auf das freie Ende der Blattfeder jeweils aufgeschobenes elastisches Lagerelement verwendet werden. Dieses Lagerelement wird über eine Federklammer am Lenker festgehalten. Eine solche Ausführung ist insofern vorteilig, da bei einer Montage bzw. Demontage ein einfaches Anbringen bzw. Ersetzen mittels der einhakbaren Federklammer gewährleistet ist.

Ein Ausführungsbeispiel der Erfindung ist in der Zeichnung dargestellt und wird im folgenden näher beschrieben.

Es zeigen
- Fig. 1: eine Vorderansicht einer Vorderachs-Radaufhängung,
- Fig. 2: eine Vorderansicht einer Blattfeder mit elastischen Federlager und endseitig elastischen Stützlager,

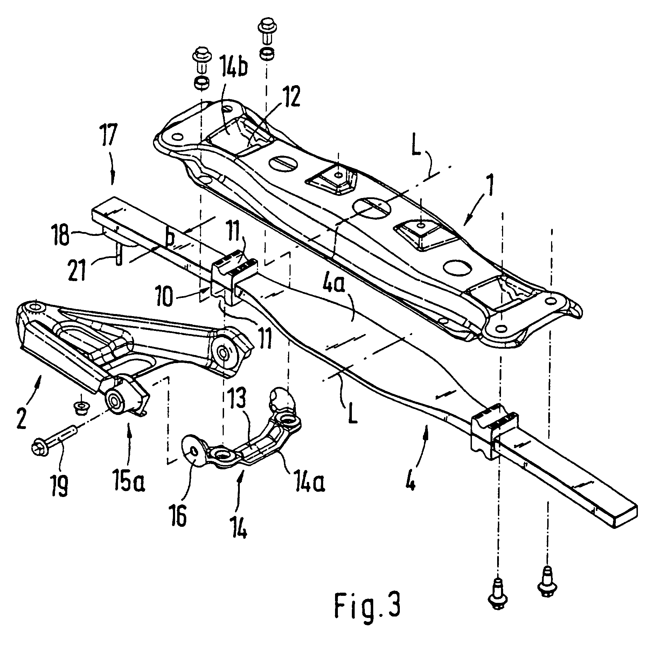

- Fig. 3: eine schaubildliche Darstellung der Vorderachse mit Querträger, Blattfeder und Dreieckslenker,
- Fig. 4: eine weitere Ausführung eines elastischen Lagerteils am freien Ende der Blattfeder mit Federklammer in einer Seitenansicht,
- Fig. 5: eine Draufsicht zu Fig. 4 und
- Fig. 6: einen Schnitt nach der Linie VI-VI der Fig. 4.

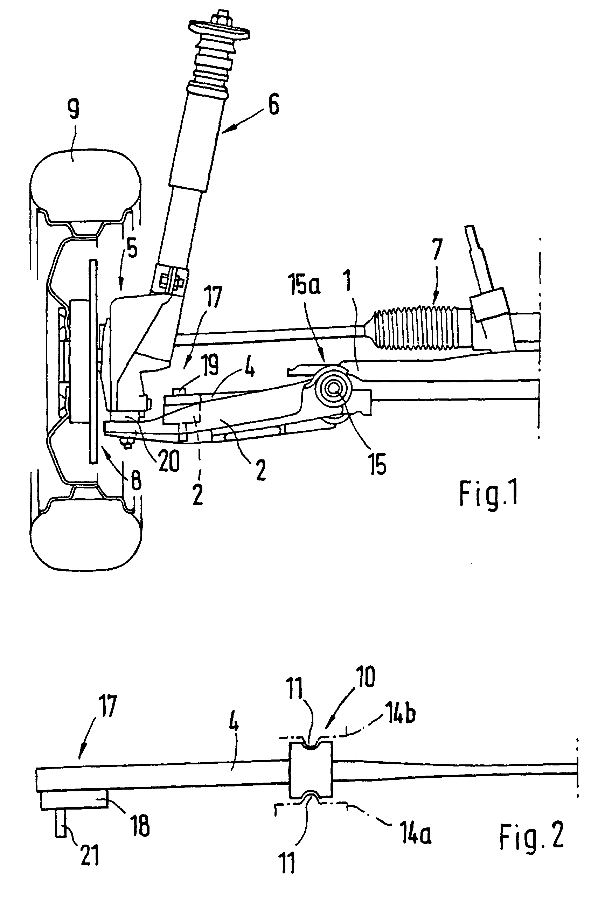

Eine Vorderachse eines Kraftfahrzeuges besteht im wesentlichen, wie in Fig. 1 dargestellt, aus einem Querträger 1, Dreieckslenkern 2, einer quer im Fahrzeug angeordneten Blattfeder 4, Schwenklagern 5, Dämpferbeinen 6, einem Lenkgetriebe 7 und Bremseinrichtungen 8 und Räder 9.

Im Querträger 1, der mit dem Fahrzeugaufbau (nicht dargestellt) verbunden ist, wird die Blattfeder 4 über elastische Federlager 10 gehalten. Diese sind zu beiden Seiten einer Fahrzeuglängsmittelachse L an den Blattfedern 4 vorgesehen und zur Ober- und Unterseite der Blattfeder 4 angeordnet.

Das Federlager 10 ist beispielsweise durch Verklebung mit der Blattfeder 4 verbunden und weist jeweils eine rillenförmige Vertiefung 11 auf, die korrespondierend mit einer entsprechend vorstehenden Ausformung 12, 13 in Haltesegmenten 14a, 14b sowohl im Querträger 1 als auch in der Federbrücke 14 in Eingriff steht. Diese Federbrücke 14 wird über Schrauben mit dem Querträger 1 verbunden. Nach Befestigung der Federbrücke 14 am Querträger 1 ist das Federlager 10 eingeklemmt und unverrückbar gehalten.

An der Federbrücke 14 sind Augen 16 vorgesehen, an welche über Schwenkbolzen 19 der Dreiecklenker 2 mit seinen Lagerungen 15a schwenkbeweglich gelagert ist. Am Dreieckslenker 2 stützt sich ein freies Ende 17 der Blattfeder 4 unter Zwischenschaltung eines elastischen Lagers 18 ab. Dieses ist mit der Blattfeder 4 verklebt und trägt einen Gewindebolzen 21, der mit dem Dreieckslenker 2 verbunden ist.

Der Dreieckslenker 2 ist am Schwenklager 5 über ein Kugelgelenk 20 gehalten, wobei am Schwenklager 5 das Dämpferbein 6 befestigt wird.

Die Blattfeder 4 ist endseitig bis zum Lager 10 von gleicher Breite b ausgeführt und weist im Mittelteil 4a eine Verbreiterung auf. Insbesondere besteht die Blattfeder 4 aus einem Glasfaserverbundwerkstoff.

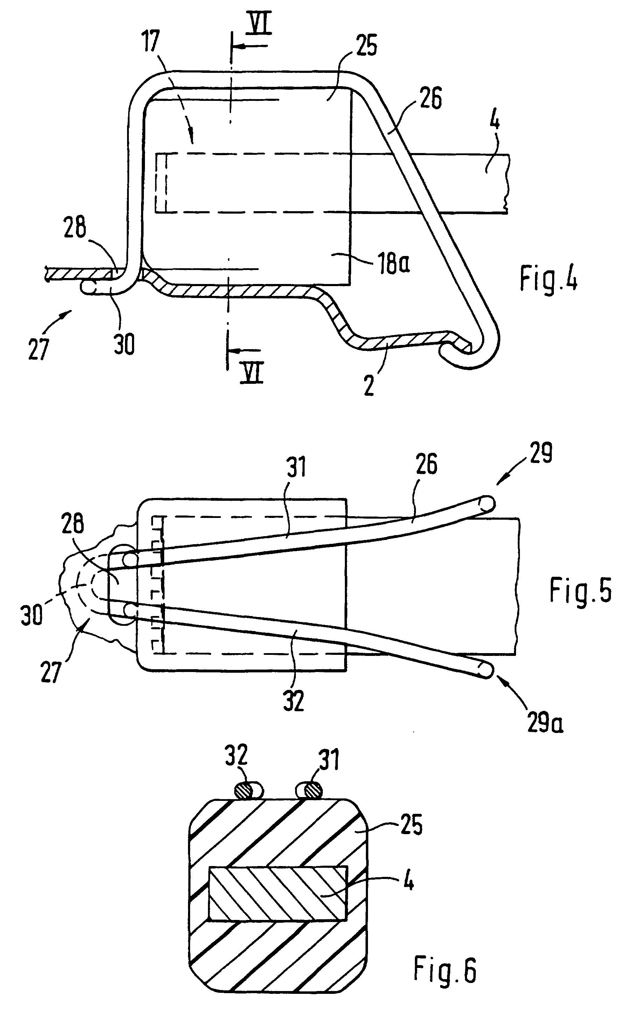

Die Blattfeder 4 kann statt der Lagerung am Dreieckslenker 2 mittels der elastischen Lager 18 nach einer weiteren Ausführung gemäß der Figuren 4, 5 und 6 auch über mittels eines Spannteils 26 festgeklemmten elastischen Lagerelement 25 am Dreieckslenker 2 ausgebildet sein.

Bei dieser Ausführung ist am freien Ende der Blattfeder 4 jeweils ein elastisches Lagerelement 25 angeordnet, welches die Blattfeder 4 vollkommen umschließt. Die Verbindung zum Dreieckslenker 2 erfolgt über ein Spannteil 26, das am Dreieckslenker 2 festgehakt wird.

Das Spannteil 26 besteht aus einem U-förmig ausgebildeten Federelement nach Art einer Federklammer, welche das Lagerelement 25 übergreift und mit seinem freien Ende 27 und den weiteren freien Enden 29, 29a am Lenker 2 einhängbar ist. Das Federelement 26 wird zur Festsetzung am Dreieckslenker 2 mit seinem Steg 30 in eine Öffnung 28 des Lenkers 2 eingefädelt und die beiden anderen freien Enden 29, 29a untergreifen seitlich der Blattfeder 4 den Lenker 2 unter Federspannung. Durch diese Anordnung wird eine einfach zu montierende Blattfeder mit einem wirkenden elastischen Element geschaffen, wobei eine Montage sowie Demontage in einfacher Weise durchführbar ist.

## Patentansprüche

1. Vorderachse für ein Kraftfahrzeug mit einer quer zum Fahrzeug angeordneten Blattfeder (4), die über zu beiden Seiten einer Längsmittelachse (L) des Fahrzeugs angeordnete elastische Lagerungen an einem Querträger (1) gelagert und über diesen mit dem Fahrzeugaufbau verbunden ist, wobei die Blattfeder (4) an ihren freien Enden (17) jeweils mit einem Dreieckslenker (2) verbunden und schwenkbar an einem aufbauseitig gehaltenen Querträger (1) gelagert ist und zwischen Schwenklagerungen (15a) des Dreieckslenkers (2) im Querträger (1) die Blattfeder (4) jeweils elastisch in einem Federlager (10) gehalten ist, **dadurch gekennzeichnet, dass** die Blattfeder (4) auf einer Länge bis zum elastischen Federlager (10) von gleichbleibender Breite (b) ist und ein sich anschließender Mittenteil (4a) in größerer Breite ausgeführt ist.

2. Vorderachse nach Anspruch 1, **dadurch gekennzeichnet, dass** die Federlager (10) die Blattfeder (4) umgeben und jeweils zwischen einer Unterfläche des Querträgers (1) und einer anschraubbaren Federbrücke (14) eingeklemmt gehalten sind.

3. Vorderachse nach den Ansprüchen 1 oder 2, **dadurch gekennzeichnet, dass** der Querträger (1) und die Federbrücke (14) zur Aufnahme der Blattfeder (4) über die Federlager (10) jeweils ausgeformte Haltesegmente (14a, 14b) aufweist, die eine vorstehende Ausformung (12,13) besitzen, in welche eine rillenförmige Einformung (11) des Federlagers (10) eingreift.

4. Vorderachse nach den Ansprüchen 1, 2 oder 3, **dadurch gekennzeichnet, dass** am freien Ende (17) der Blattfeder (4) jeweils eine Schraube (21) gehalten und in einem Federelement (18) angeordnet ist, welches eine obenseitige elastische Abstützung zum Dreieckslenker (2) bildet.

5. Vorderachse nach einem oder mehreren der vorhergehenden Ansprüche, **dadurch gekennzeichnet, dass** die Blattfeder (4) aus einem Glasfaserverbundwerkstoff besteht.

6. Vorderachse nach Anspruch 1, **dadurch gekennzeichnet, dass** die Vorderachse, bestehend aus dem Querträger (1) mit verbundener Blattfeder (4), dem Federlager (10) und elastischer Abstützung (18), dem Federbein (6) mit Bremseinrichtung (8) und Lenkgetriebe (7) als funktionsfertige Moduleinheit verwendbar ist.

7. Vorderachse nach Anspruch 1 oder einem der vorhergehenden Ansprüche, **dadurch gekennzeichnet, dass** am freien Ende (17) der Blattfeder (4) ein umschließendes elastisches Lagerelement (25) angeordnet ist, welches über ein Spannteil (26) am Dreieckslenker (2) festgehalten ist.

8. Vorderachse nach den Ansprüchen 1 oder 7, **dadurch gekennzeichnet, dass** das Spannteil (26) aus einem Federelement besteht, das mit seinem einen Ende (27) in eine Öffnung (28) des Dreieckslenkers (2) einhängbar ist und mit seinen anderen Enden (29, 29a) den Dreieckslenker (2) haltend untergreift.

9. Vorderachse nach den Ansprüchen 1, 7 oder 8, **dadurch gekennzeichnet, dass** das Federelement (26) aus einer U-förmigen das Lagerelement (25) umgreifenden Federklammer besteht, deren Steg (30) in der Öffnung (28) des Lenkers (2) eingehängt gehalten ist und sich Schenkel (31, 32) der Federklammer divergierend nach außen erstrecken.

## Claims

1. A front axle for a motor vehicle with a leaf spring (4) which is arranged transversely to the vehicle and which is mounted on a transverse member (1) by way of resilient mountings arranged on both sides of a longitudinal median axis (L) of the vehicle and is connected to the vehicle body by way of the said transverse member (1), wherein the leaf spring (4) is connected at the free ends (17) thereof to a respective A-frame arm (2) in each case and is mounted in a pivotable manner on a transverse member (1) held on the body and the leaf spring (4) is held resiliently in a respective spring bearing (10) between pivoting mountings (15a) of the A-frame arm (2) in the transverse member (1), **characterized in that** the leaf spring (4) has a uniform width (b) over a length as far as the resilient spring bearing (10) and an adjoining middle part (4a) is produced with a greater width.

2. A front axle according to Claim 1, **characterized in that** the spring bearings (10) surround the leaf spring (4) and are held clamped in each case between an under surface of the transverse member (1) and a spring bridge (14) which can be screwed on.

3. A front axle according to Claim 1 or 2, **characterized in that** the transverse member (1) and the spring bridge (14) have holding segments (14a, 14b) which are moulded in each case for receiving the leaf spring (4) by way of the spring bearings (10) and which have a projecting convex portion (12, 13) into which a channel-shaped concave portion (11) in the spring bearing (10) engages.

4. A front axle according to Claim 1, 2 or 3, **characterized in that** a respective bolt (21) is held at the free end (17) of the leaf spring (4) and is arranged in a spring member (18) which forms a resilient support at the top for the A-frame arm (2).

5. A front axle according to one or more of the preceding Claims, **characterized in that** the leaf spring (4) consists of a glass-fibre composite material.

6. A front axle according to Claim 1, **characterized in that** the front axle, comprising the transverse member (1) with the leaf spring (4) connected thereto, the spring bearing (10) and the resilient support (18), the telescopic leg (6) with the brake device (8) and the steering mechanism (7), can be used as a modular unit ready for operation.

7. A front axle according to Claim 1 or one of the preceding Claims, **characterized in that** an enclosing resilient bearing member (25), which is held rigidly on the A-frame arm (2) by way of a clamping part (26), is arranged at the free end (17) of the leaf spring (4).

8. A front axle according to Claim 1 or 7, **characterized in that** the clamping part (26) comprises a spring member which at one end (27) thereof can be suspended in an opening (28) in the A-frame arm (2) and at the other ends (29, 29a) thereof engages under the A-frame arm (2) in a retaining manner.

9. A front axle according to Claim 1, 7 or 8, **characterized in that** the spring member (26) comprises a U-shaped spring clip which engages around the bearing member (25) and the web (30) of which is held suspended in the opening (28) in the arm (2), and legs (31, 32) of the spring clip extend in a manner diverging outwards.

## Revendications

1. Essieu avant pour un véhicule automobile, comportant un ressort à lame (4) disposé transversalement au véhicule, qui est monté sur une traverse (1), par des paliers élastiques disposés des deux côtés d'un axe médian longitudinal (L) du véhicule, et qui est relié à la carrosserie du véhicule par ces paliers, le ressort à lame (4) étant relié, à chacune de ses extrémités libres (17), à un bras oscillant triangulaire (2) et étant monté pivotant sur une traverse (1) fixée côté carrosserie, et entre des paliers pivotants (15a) du bras oscillant triangulaire (2), le ressort à lame (4) étant maintenu élastiquement dans un palier de ressort (10), **caractérisé en ce que** le ressort à lame (4) présente une largeur (b) constante sur une longueur qui s'étend jusqu'au palier de ressort (10) élastique et compose une partie centrale (4a) suivante de plus grande largeur.

2. Essieu avant selon la revendication 1, **caractérisé en ce que** les paliers de ressort (10) entourent le ressort à lame (4) et sont maintenus serrés chacun entre une face inférieure de la traverse (1) et un pont de ressort (14) à visser.

3. Essieu avant selon les revendications 1 ou 2, **caractérisé en ce que** la traverse (1) et le pont de ressort (14) comportent, pour recevoir le ressort à lame (4) par le palier de ressort (10), des éléments de maintien respectifs (14a, 14b) qui possèdent un bossage saillant (12, 13) dans lequel pénètre un creux en forme de gorge (11) du palier de ressort (10).

4. Essieu avant selon les revendications 1, 2 ou 3, **caractérisé en ce qu'**à l'extrémité libre (17) du ressort à lame (4) est fixée une vis (21) qui est disposée dans un élément (18) du ressort, lequel forme un appui élastique sur la face supérieure pour le bras oscillant triangulaire (2).

5. Essieu avant selon une ou plusieurs des revendications précédentes, **caractérisé en ce que** le ressort à lame (4) est constitué d'un matériau composite aux fibres de verre.

6. Essieu avant selon la revendication 1, cacactérisé en ce que l'essieu avant, constitué de la traverse (1) avec ressort à lame (4) relié, du palier de ressort (10) et de l'appui élastique (18), de la jambe à force de ressort (6) avec dispositif de freinage (8) et mécanisme de direction (7), peut être utilisé comme unité modulaire fonctionnelle finie.

7. Essieu avant selon la revendication 1 ou l'une des revendications précédentes, caractézisé en ce qu'à l'extrémité libre (17) du ressort à lame (4) est disposé un élément de palier (25) élastique l'entourant qui est fixé au bras oscillant triangulaire (2) par un élément de tension (26).

8. Essieu avant selon les revendications 1 ou 7, **caractérisé en ce que** l'élément de tension (26) est constitué d'un élément de ressort qui peut s'accrocher par l'une de ses extrémités (27) dans une ouverture (28) du bras oscillant triangulaire (2) et qui par son autre extrémité (29, 29a) passe sous le bras oscillant triangulaire (2) en le maintenant.

9. Essieu avant selon les revendications 1, 7 ou 8, **caractérisé en ce que** l'élément de ressort (26) est constitué d'une agrafe à ressort en U, entourant l'élément de palier (25), dont le dos (30) est maintenu accroché dans l'ouverture (28) du bras oscillant (2) et dont les branches (31, 32) s'étendent en s'écartant vers l'extérieur.
